# EUROPÄISCHE PATENTANMELDUNG

(11) **EP 1 260 755 A1**
(43) Veröffentlichungstag der Anmeldung: **27.11.2002**
(21) Anmeldenummer: 02450064.7
(22) Anmeldetag: 19.03.2002
(51) Int. Cl.: F17C 3/08, B60P 3/22

(54) **Tank und Tanksattelauflieger**

(30) Priorität: 27.04.2001 AT 6842001
(71) Anmelder: Schwingenschlögel Gesellschaft m.b.H., 5301 Salzburg-Eugendorf (AT)
(72) Erfinder: Schwingenschlögel, Ernst, 5300 Hallwang (AT); Schwingenschlögel, Kurt, 5081 Anif (AT)
(74) Vertreter: Rippel, Andreas, Dipl.-Ing.

(57) **Zusammenfassung**

Ein Tank, z.B. ein Tankfahrzeug, ein Tankcontainer oder ein Tanksattelauflieger, zum Transport von ticfgekühlten, verflüssigten Gasen besitzt einen das verflüssigte Gas aufnehmenden Innenbehälter (1) und einen diesen in einem Abstand umgebenden Außenbehälter (2), wobei zwischen dem Innenbehälter (1) und dem Außenbehälter (2) ein Vakuum besteht. Der Innenbehälter (1) besteht aus rostfreiem Stahl und der Außenbehälter (2) aus einer Aluminiumlegierung.

Dadurch wird das Eigengewicht des Tanks vermindert, trotzdem jedoch die Sicherheit nicht beeinträchtigt.

## Beschreibung

Die Erfindung bezieht sich auf einen Tank für ein Tankfahrzeug, einen Tankcontainer oder einen Tanksattelauflieger, zum Transport von tiefgekühlten, verflüssigten Gasen, mit einem das verflüssigte Gas aufnehmenden Innenbehälter und einem diesen in einem Abstand umgebenden Außenbehälter, wobei zwischen dem Innenbehälter und dem Außenbehälter ein Vakuum besteht.

Als verflüssigte Gase, die in solchen Tanks transportiert werden, kommen z.B. Argon, Sauerstoff oder Stickstoff in Betracht. Die Fülltemperaturen reichen von etwa -183°C bis fast -200°C. Demgemäß sind einerseits die Beanspruchungen der Behälter groß, andererseits die Anforderungen an die Sicherheit hoch.

Man hat daher bisher solche Tanks mit Innen- und Außenbehältem aus rostfreiem Stahl gebaut. Dadurch waren jedoch die Eigengewichte dieser Tanks, insbesondere Tankfahrzeuge verhältnismäßig hoch.

In der US 3 696 959 A ist ein Tank beschrieben, dessen Innentank aus Aluminium und dessen Außentank aus Stahl besteht. Dadurch wird zwar eine Gewichtsverminderung erreicht, die Sicherheit wird jedoch geringer.

Die Erfindung hat es sich zum Ziel gesetzt, einen Tank der eingangs genannten Art zu schaffen, dessen Eigengewicht niederer als die Eigengewichte bisheriger Tanks ist, trotzdem jedoch die Sicherheit nicht beeinträchtigt wird. Erreicht wird dies dadurch, daß der Innenbehälter aus rostfreiem Stahl und der Außenbehälter aus einer Aluminiumlegierung besteht.

Von der Anmelderin angestellte Überlegungen und Versuche haben gezeigt, daß trotz der durch diese Materialkombination erzielbaren Gewichtsverminderung die Sicherheit nicht beeinträchtigt wird.

Durch die erfindungsgemäße Maßnahme kann z.B. bei einem Gastanksattelauflieger üblicher Größe das Eigengewicht um ca. 1500 kg reduziert werden. Bei gegebenem Gesamtgewicht kann somit die Nutzlast um ca. 1500 kg erhöht werden.

Zur Verbindung des Innenbehälters mit dem Außenbehälter ist der Innenbehälter an seinem Stirnende über eine annähernd senkrecht zu seiner Längsachse verlaufende Membranplatte mit dem Außenbehälter verbunden. Dadurch wird eine insbesondere zufolge der Temperaturunterschiede hervorgerufene Relativbewegung von Innenbehälter zu Außenbehälter ermöglicht.

Im Bereich des der Membranplatte gegenüberliegenden Endes ist der Innenbehälter über einen Kegelstumpf mit dem Außenbehälter verbunden.

Zweckmäßig erfolgt die Verbindung der Membranplatte und/oder des Kegelstumpfes mit dem Außenbehälter über Schließringbolzen.

Zur Durchführung der aus rostfreiem Stahl bestehenden, vom Innenbehälter ausgehenden Rohrleitungen durch den Außenbehälter sind auf einem Rohrstutzen des Außenbehälters warm aufgepreßte Hülsen aus rostfreiem Stahl vorgesehen, die mit den Rohrleitungen verbunden sind. Diese, unter der Bezeichnung "Bimetallic Transition Junctions CEA System" auf dem Markt befindliche Verbindungsart hat sich bei anderen Anwendungsgebieten bereits bewährt.

Bei einer bevorzugten Ausführungsform der Erfindung weisen bei einem Tanksattelauflieger beide Behälter einen an einen zylindrischen Teil anschließenden, sich in Fahrtrichtung verjüngenden kegeligen Teil auf. Dadurch wird die Gesamthöhe des Tanksattelanhängers gegenüber der bisherigen Bauweise reduziert. Durch die niedrige Bauweise und den dadurch tiefer liegenden Schwerpunkt wird auch die Kippstabilität des Tanksattelaufliegers verbessert.

Um eine weitere Verringerung der Fahrzeughöhe zu erreichen wird vorgeschlagen, daß der Fahrwerkrahmen aus Aluminiumlegierung-Profilen besteht, die in die ebenfalls aus einer Aluminiumlegierung bestehenden Behälterkonsolen integriert sind.

Nachstehend ist die Erfindung anhand eines in den Zeichnungen dargestellten Ausführungsbeispieles näher beschrieben, ohne auf dieses Beispiel beschränkt zu sein. Dabei zeigen:
Fig. 1 einen Schnitt durch beide Behälter eines erfindungsgemäßen Tanksattelaufliegers;
Fig. 2 ein Detail X aus Fig. 1;
Fig. 3 ein Detail Y aus Fig. 1;
Fig. 4 ein Detail V aus Fig. 1;
Fig. 5 in gegenüber der Fig. 1 vergrößertem Maßstab den vorderen und hinteren Endteil der beiden Behälter;
Fig. 6 und 7 in zwei zueinander senkrechten Ansichten den hinteren Teil eines Tanksattelaufliegers.

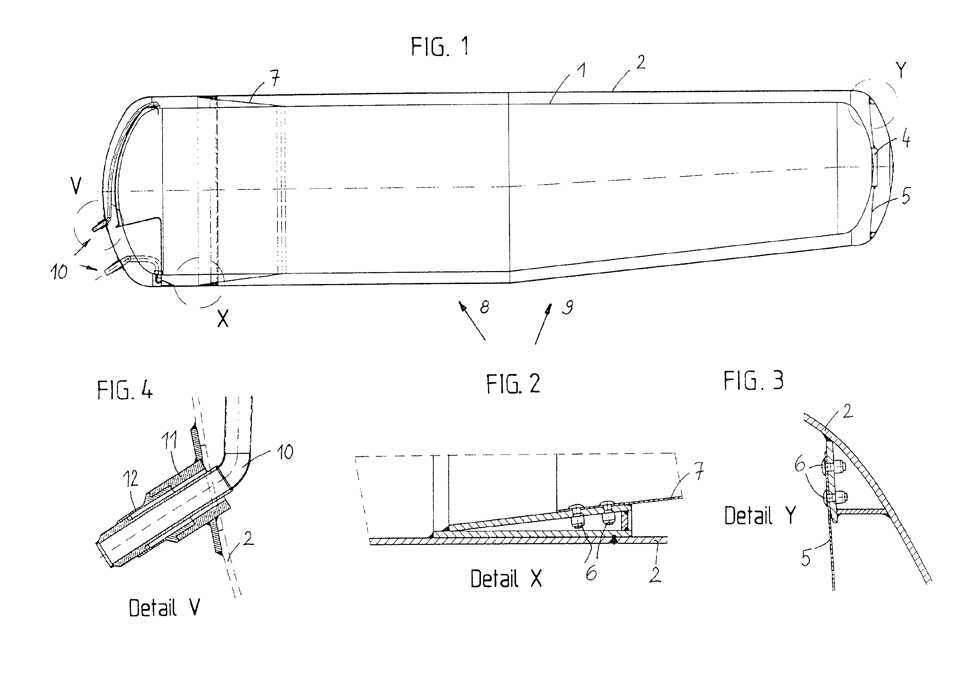

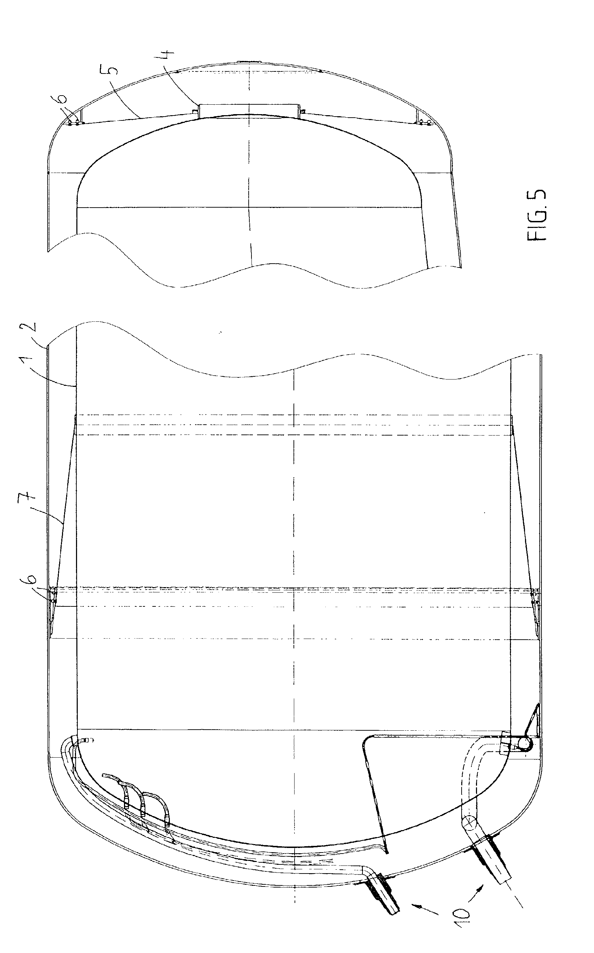

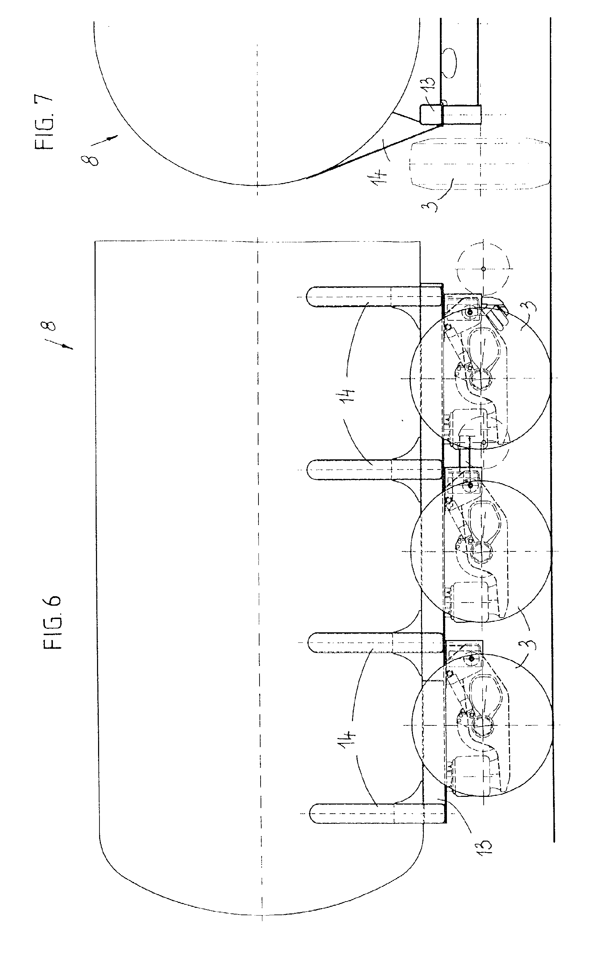

Der in den Fig. 1 und 5 aus einem Innenbehälter 1 und einem Außenbehälter 2 bestehende Gastank ist Teil eines Tanksattelaufliegers, dessen Fahrwerk mit Rädern 3 aus Fig. 6 ersichtlich ist. Der Innenbehälter 1 besteht aus rostfreiem Stahl und der Außenbehälter 2 aus einer Aluminiumlegierung.

Zur Verbindung des Innenbehälters 1 mit dem Außenbehälter 2 ist am Stirnende des Innenbehälters 1 über einen Ring 4 eine Membranplatte 5 angeordnet, die im Wesentlichen senkrecht zur Längsachse der beiden Behälter 1 und 2 verläuft. Wie insbesondere aus Fig. 3 ersichtlich ist, erfolgt die Verbindung der Membranplatte 5 mit dem Außenbehälter 2 über Schließringbolzen 6.

An der der Membranplatte 5 gegenüberliegenden Seite sind die beiden Behälter 1 und 2 über einen Kegelstumpf 7 miteinander verbunden. Zur Befestigung des Kegelstumpfes 7 am Außenbehälter 2 sind ebenfalls Schließringbolzen 6 vorgesehen (Fig. 2).

Beide Behälter 1 und 2 bestehen aus einem zylindrischen Teil 8 und einem daran anschließenden kegeligen Teil 9, der sich in Fahrtrichtung verjüngt.

Rohrleitungen 10 dienen der Befüllung und Entleerung des Innenbehälters 1 und bestehen aus rostfreiem Stahl.

Um eine vakuumdichte Durchführung der aus rostfreiem Stahl bestehenden Rohrleitung durch den aus einer Aluminiumlegierung bestehenden Außenbehälter 2 zu erreichen, ist das Ende jeder Rohrleitung 10 durch einen Rohrstutzen 11 des Außenbehälters 2 durchgeführt und über eine Hülse 12 mit dem Rohrstutzen 11 verbunden. Dies ist insbesondere in Fig. 4 dargestellt. Die Hülse 12 besteht, wie die Rohrleitung 10, aus rostfreiem Stahl und ist mit dem Rohrstutzen 11 warm verpreßt und mit dem Ende der Rohrleitung 10 verbunden, insbesondere verschweißt.

Das in den Fig. 6 und 7 dargestellte Fahrwerk weist einen Fahrwerkrahmen auf, dessen Profile 13 aus einer Aluminiumlegierung bestehen. Diese Profile 13 sind in die ebenfalls aus einer Aluminiumlegierung bestehenden Behälterkonsolen 14 integriert.

Im Rahmen der Erfindung sind zahlreiche Abänderungen möglich. Insbesondere können konstruktive Details verändert werden, ohne vom Grundgedanken der Erfindung, die Verwendung zweier unterschiedlicher Materialien von Außenbehälter und Innenbehälter, abzuweichen. Auch kann ein erfindungsgemäßer Tank nicht nur für Tanksattelauflieger, sondern auch für andere Tanks, wie Eisenbahncontainer oder Wechselbehälter verwendet werden.

## Patentansprüche

1. Tank für ein Tankfahrzeug, einen Tankcontainer oder einen Tanksattelauflieger, zum Transport von tiefgekühlten, verflüssigten Gasen, mit einem das verflüssigte Gas aufnehmenden Innenbehälter (1) und einem diesen in einem Abstand umgebenden Außenbehälter (2), wobei zwischen dem Innenbehälter (1) und dem Außenbehälter (2) ein Vakuum besteht, **dadurch gekennzeichnet, daß** der Innenbehälter (1) aus rostfreiem Stahl und der Außenbehälter (2) aus einer Aluminiumlegierung besteht.

2. Tank nach Anspruch 1, **dadurch gekennzeichnet, daß** der Innenbehälter (1) an seinem Stirnende über eine annähernd senkrecht zu seiner Längsachse verlaufende Membranplatte (5) mit dem Außenbehälter (2) verbunden ist.

3. Tank nach Anspruch 1 oder 2, **dadurch gekennzeichnet, daß** der Innenbehälter (1) im Bereich des der Membranplatte (5) gegenüberliegenden Endes über einen Kegelstumpf (7) mit dem Außenbehälter (2) verbunden ist.

4. Tank nach Anspruch 2 oder 3, **dadurch gekennzeichnet, daß** die Verbindung der Membranplatte (5) und/oder des Kegelstumpfes (7) mit dem Außenbehälter (2) über Schließringbolzen (6) erfolgt.

5. Tank nach einem der Ansprüche 1 bi 4, **dadurch gekennzeichnet, daß** zur Durchführung der aus rostfreiem Stahl bestehenden, vom Innenbehälter (1) ausgehenden Rohrleitungen (10) durch den Außenbehälter (2) auf einen Rohrstutzen (11) des Außenbehälters (2) warm aufgepreßte Hülsen (12) aus rostfreiem Stahl vorgesehen sind, die mit den Rohrleitungen (10) verbunden sind.

6. Tanksattelauflieger nach einem der Ansprüche 1 bis 5, **dadurch gekennzeichnet, daß** beide Behälter (1, 2) einen an einen zylindrischen Teil (8) anschließenden, sich in Fahrtrichtung verjüngenden kegeligen Teil (9) aufweisen.

7. Tanksattelauflieger nach einem der Ansprüche 1 bis 6, **dadurch gekennzeichnet, daß** dessen Fahrwerkrahmen aus Aluminiumlegierung-Profilen (13) besteht, die in die ebenfalls aus einer Aluminiumlegierung bestehenden Behälterkonsolen (14) integriert sind.
